# EUROPEAN PATENT SPECIFICATION

(11) **EP 0 416 922 B1**
(45) Date of publication and mention of the grant of the patent: **07.01.1998**
(21) Application number: 90309762.4
(22) Date of filing: 06.09.1990
(51) Int. Cl.: G06F 1/16

(54) **Rotatable display unit**
Drehbare Anzeigeeinheit
Unité d'affichage pouvant être pivotée

(30) Priority: 07.09.1989 JP 230328/89
(43) Date of publication of application: 13.03.1991
(73) Proprietor: KABUSHIKI KAISHA TOSHIBA, Kawasaki-shi, Kanagawa-ken 210 (JP)
(72) Inventor: Ohgami, Keizo, c/o Intellectual Property Division, Minato-ku, Tokyo (JP); Hosoi, Takashi, c/o Intellectual Property Division, Minato-ku, Tokyo (JP)
(74) Representative: BATCHELLOR, KIRK & CO.

(56) References cited:
- WO-A-86/07172
- DE-U- 8 913 878
- US-A- 4 542 872
- US-A- 4 864 523

## Description

This invention relates to a laptop computer e.g. portable word processor.

A laptop computer disclosed in US patent 4,864,523 comprises a base unit and a display unit pivotally connected to the base unit. The base unit has a keyboard. The display unit has a display screen and pivots in a vertical plane between a closed position for covering the keyboard and an open position for operating the keyboard.

When an operator operating the keyboard wants to show the display screen to a neighbour, the operator has to horizontally rotate the base unit because the display unit can only pivot in a vertical plane.

In accordance with the invention as defined in claim 1 there is provided a laptop computer comprising a base unit having a keyboard and a flat panel display unit having a display screen,
characterised by:
means for pivoting the flat panel display unit in a vertical plane between a closed position to cover the keyboard with the flat panel display unit and an open position for operating the keyboard and for rotating the flat panel display unit in a horizontal plane between the open position and a rotated open position.

One embodiment of the invention will now be described by way of example with reference to the accompanying drawings in which:
Figure 1 is a perspective view of a laptop computer according to a first embodiment of the present invention;
Figure 2 is an exploded perspective view of a turntable unit;
Figure 3 is a plan view of Figure 1;
Figure 4 is an underneath plan view of the turntable unit when the display unit is set in the open position;
Figure 5 is a side view of Figure 4, partly in cross section;
Figure 6 is a side view of the laptop computer when the display unit is set in a closed position;
Figure 7 is an underneath plan view of the turntable unit when the display unit is set in the closed position;
Figure 8 is a side view of Figure 7, partly in cross section;
Figure 9 is a plan view of the laptop computer when the display unit is set in a rotated position;
Figure 10 is an underneath plan view of the turntable unit when the display unit is set in the rotated position;
Figure 11 is a perspective view for explaining a hinge device for pivoting the display unit in a vertical plane;
Figure 12 is a perspective view of a laptop computer according to a second embodiment of the present invention;
Figure 13 is a plan view of the laptop computer according to the second embodiment when the display unit is set in a rotated position;
Figure 14 is a perspective view of a laptop computer according to a third embodiment of the present invention; and
Figure 15 is a plan view of the laptop computer of the third embodiment when the display unit is set in a rotated position.

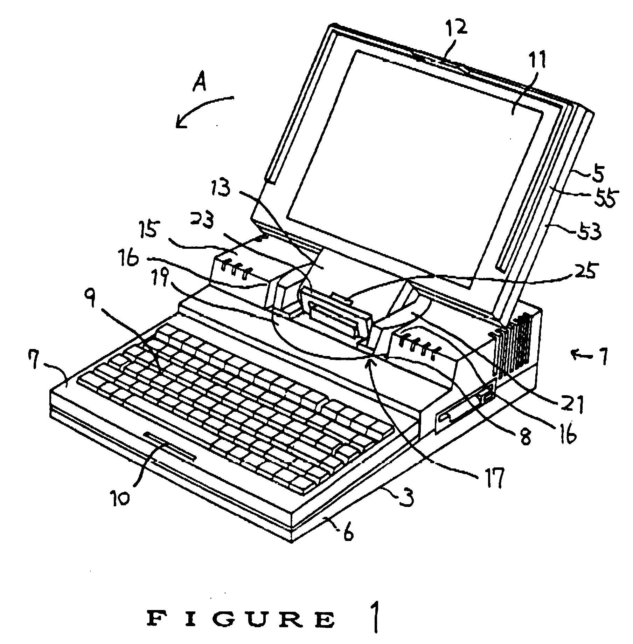

Figure 1 illustrates a laptop computer, when the display unit is set in an open position, according to a first embodiment of the present invention.

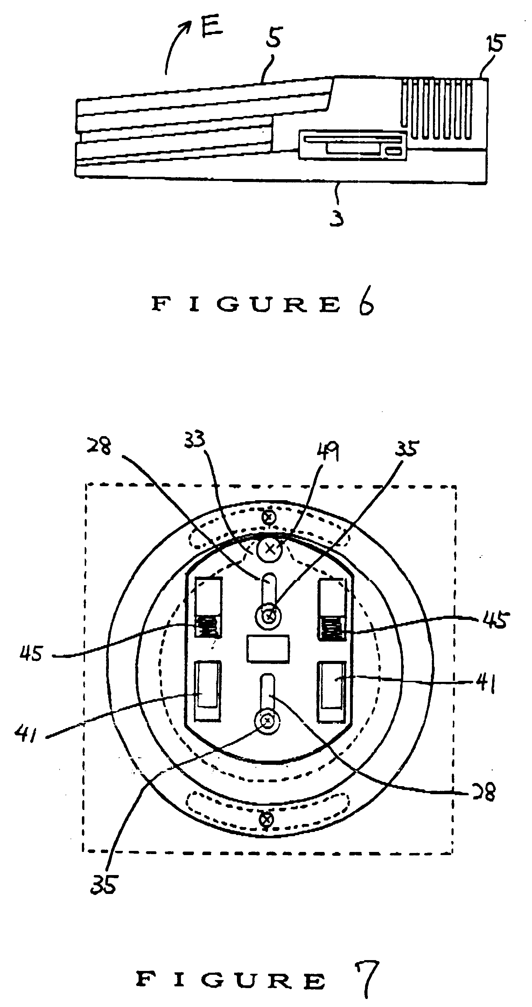

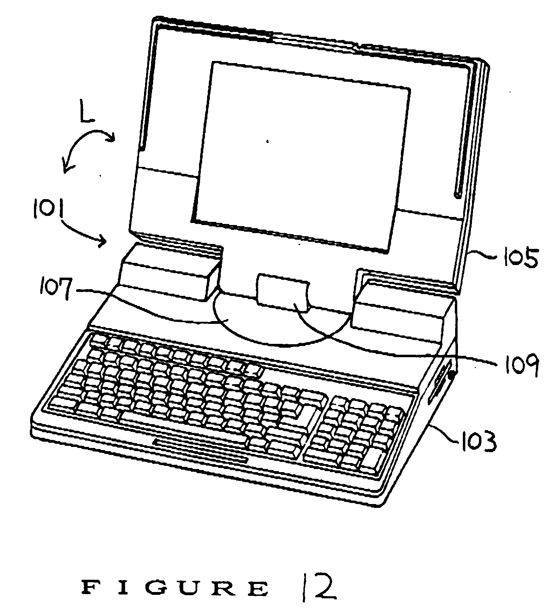

A portable computer 1 has a body unit 3 and a display unit 5. Body unit 3 has a bottom case 6, a front upper case 7 and a rear upper case 15. Front upper case 7 has a keyboard 9 and a latch hole 10. Rear upper case 15 has a recess portion 8 and a pair of inner corners 16. A turntable unit 17 is mounted in recess 8. Turntable unit 17 has a turntable 19, a display support member 21 and a display stop member 23. Turntable 19 rotates relative to base unit 3 in a horizontal plane. Display supporter 21 is fixed on turntable 19. Display stop member 23 is pivotally connected to turntable 19. Display unit 5 has an outer case 53, an inner case 55, a display screen 11, a latch claw 12 and a leg 13. Leg 13 is pivotally connected to display supporter 21 by a hinge device 51 (shown in Figure 11) fixed to outer case 53. Display unit 5 rotates in a vertical plane between a closed position (shown in Figure 6) for covering keyboard 9 and an open position (shown in Figure 1) for operating keyboard 9 in a vertical direction. A cable guide duct 25 is provided between turntable 19 and leg 13 of display unit 5. Cable guide duct 25 guides a cable 73 (shown in Figure 11) for electrically connecting display unit 5 to base unit 3. Cable guide duct 25 is disclosed in U.S. patent 4,864,523 in detail.

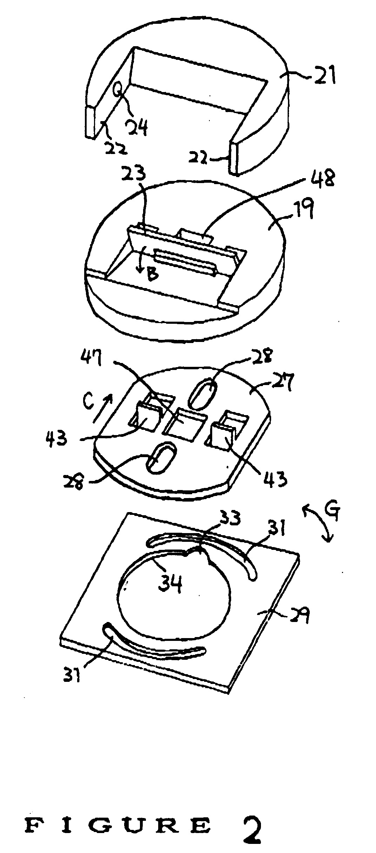

Figure 2 is an exploded perspective view of turntable unit 17.

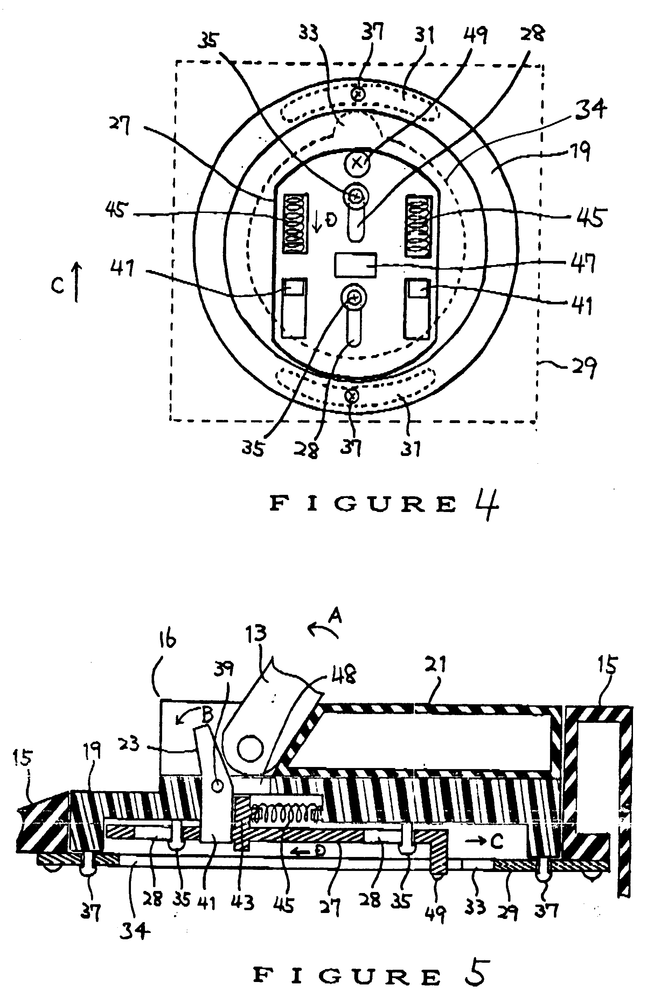

Turntable unit 17 has turntable 19, display support plate 21 fixed on turntable 19, display stop member 23 pivotally connected to turntable 19, a slide plate 27 slidably connected to turntable 19 and a rotary guide plate 29, fixed to base unit 3, for guiding the horizontal movement of turntable 19 relative to base unit 3. Rotary guide plate 29 is fixed on the inner surface of rear upper case 15 by screws 34 (shown in Figure 5). Display support plate 21 has a pair of inner side walls 22. Each inner side wall 22 has an axis hole 24 fixed to one end of hinge device 51 for rotating display unit 5 in the vertical direction, respectively. Display stop member 23 is pivotally connected to turntable 19, so as to be pivotable in the direction of an arrow B. Slide plate 27 has a pair of straight guide slots 28. Each straight guide slot 28 cooperates with a first guiding projection 35 (shown in Figure 4 and 5) mounted on the underneath surface of turntable 19 respectively. Side plate 27 has a pair of upwardly projecting abutments 43. Each abutment 43 is engaged and pushed in a direction of an arrow C by a cooperating leg portion 41 (shown in Figure 4 and 5) of display stop member 23, respectively. When display stop member 23 rotates in the direction of arrow B, the legs 41 push the abutment plates 43. Slide plate 27 thus slides along straight guide slots 28 in the direction of arrow C. Slide plate 27 has a first cable guide hole 47. Turntable 19 has a second cable guide hole 48 (shown in Figure 5). Cable 73 (shown in Figure 11), for electrically connecting display unit 5 and base unit 3, is guided in first and second cable guide holes 47, 48. Rotary guide plate 29 has a pair of curved guide slots 31. Each curved guide slot 31 guides one of a pair of second guiding-projections 37 (shown in Figure 4 and 5) mounted on the underneath surface of turntable 19 in the direction of an arrow G, respectively. Rotary guide plate 29 has an inner recess 33 and a inner stopper wall 34. When display unit 5 is pivoted in the direction of arrow A from the open position, towards the closed position, a stopper pin 49 (shown in Figure 4 and 5) mounted on slide plate 27 enters recess 33, allowing the display unit 5 to pivot to the closed position.

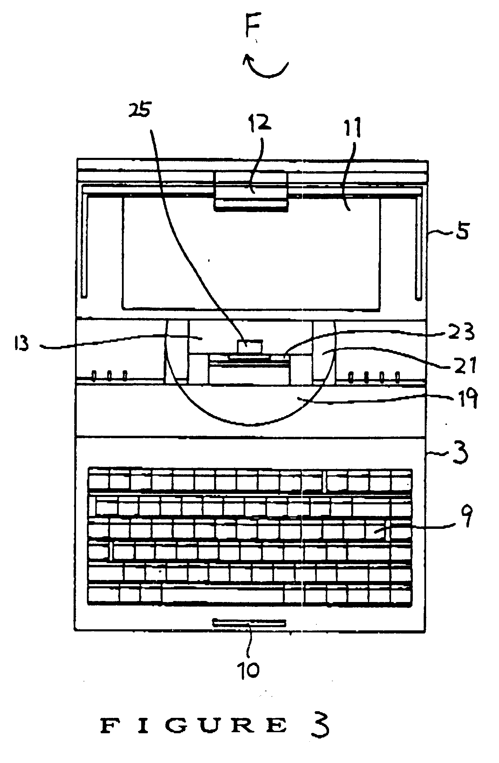

Figure 3 is a plan view of Figure 1, Figure 4 is an underneath plan view of turntable unit 17 and Figure 5 is a side view of Figure 4, partly in cross-section, when display unit 5 is set in the open position.

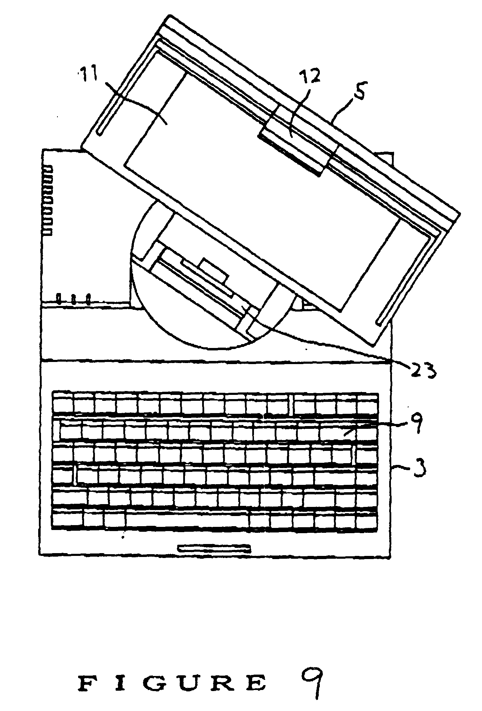

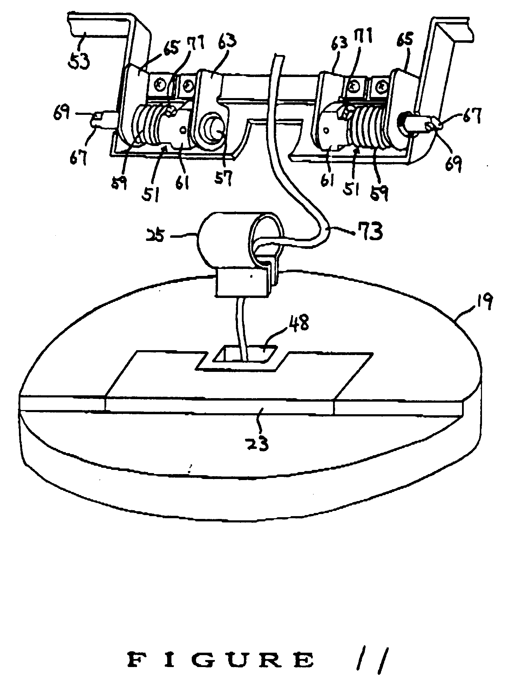

When display unit 5 is set in the open position shown in Figure 3, turntable unit 17 is set in the first position shown in Figure 4 and Figure 5. Each of first guiding projections 35 mounted on the under surface of turntable 19 is engaged in one of the straight guide slots 28 of slide plate 27, respectively. Each of second guiding projections 37 mounted on the under surface of turntable 19 is engaged in one of the curved guide slots 31 of rotary guide plate 29, respectively. Display stop member 23 is pivotally connected to turntable 19 by a spindle 39, so as to be rotatable in the direction of arrow 8. Display stop member 23 has a leg portion 41 for engaging abutment member 43 of slide plate 27. A pair of coil springs 45 are provided between turntable 19 and slide plate 27. Coil springs 45 urge the slide plate 27 in the direction of arrow D. Cable 73 (shown in Figure 11) is guided in first cable guide hole 47 (shown in Figure 4) and second cable guide hole 48 (shown in Figure 5). Slide plate 27 has a stop pin 49. Stop pin 49 engages in inner recess 33 when display unit 5 is pivoted from the open position to the closed position, and prevents slide plate 27 from sliding in the direction of arrow G (shown in Figure 10) when display unit 5 is pivoted vertically in the rotated position (shown in Figure 9).

When an operator pivots display unit 5, set in the open position shown in Figure 3, in the direction of arrow A (shown in Figure 1), leg 13 of display unit 5 engages display stop member 23. Display stop member 23 rotates around axis 39, in the direction of arrow B. Leg portions 41 of display stop member 23 pushes pushed plates 43 of slide plate 27. Slide plate 27 slides against the force of coil springs 45 in the direction of arrow D along straight guide slots 28 in the direction of arrow C. When slide plate 27 slides in the direction C, stop pin 49 engages in inner recess 33 of rotary guide plate 29. Consequently display stopper 23 folds down onto turntable 19 and display unit 5 is set in the closed position shown in Figure 6.

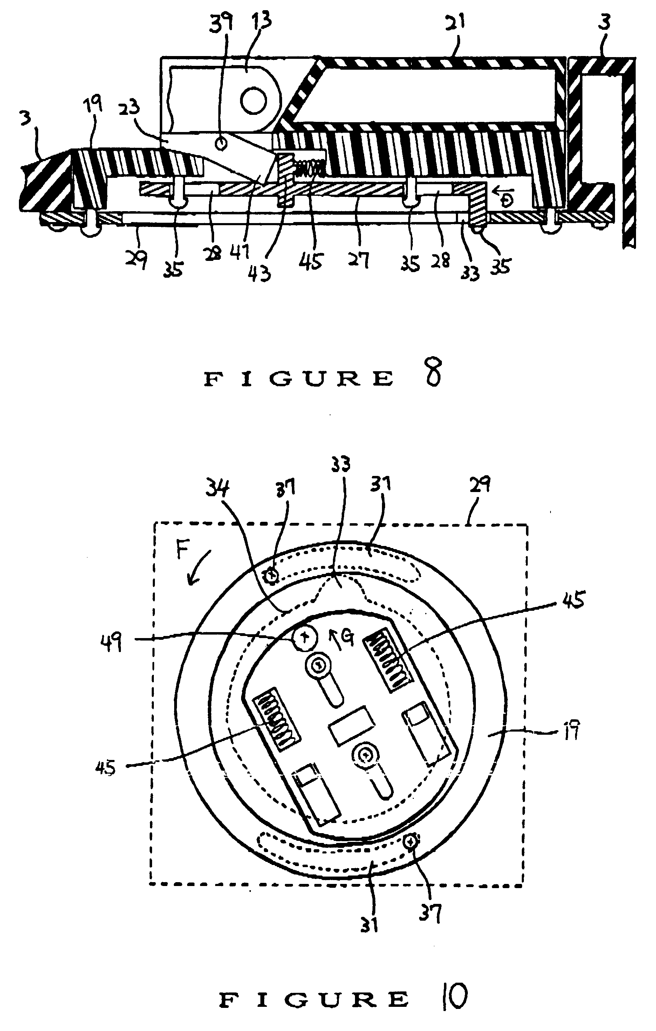

Figure 6 illustrates laptop computer 1 when display unit 5 is set in the closed position. Figure 7 is an underneath plan view of turntable unit 17 and Figure 8 is a side view of Figure 7, partly in cross-section, when display unit 5 is set in the open position.

When display unit 5 is set in the closed position, latch claw 12 of display unit 5 engages with latch recess 10. Display unit 5 covers keyboard 9 in the closed position. In the closed position, the rear upper surface of rear upper case 15 is flush with the outer surface of leg 13 and the upper portion of display support member 21. Turntable unit 17 is set in the second position shown in Figure 7 and Figure 8. Stop pin 35 of slide plate 27 is engaged in inner recess 33 of rotary guide plate 29, so that display stop member 23 is folded onto turntable 19.

When the operator releases the engagement between latch claw 12 and latch recess 10, display unit 5 is rotatable in the vertical direction (arrow E). When the operator erects display unit 5 in the vertical direction, the contact between leg 13 of display unit 5 and display stop member 23 is released. Coil springs 45 push the slide plate 27 back in the direction of arrow D. Slide plate 27 slides, along straight guide slots 28, from the second position shown in Figure 7 and 8 to the first position shown in Figure 4 and 5. Abutment members 43 of slide plate 27 engage with the side of leg portions 41 of display stop member 23. Display stop member 23 rotates around axis 39 and is erected relative to turntable 19. Stop pin 35 leaves inner recess 33, so that horizontal rotation of turntable 19 is then allowed.

Figure 9 illustrates laptop computer 1 when display unit 5 is set in a rotated position. Figure 10 is an underneath view of turntable unit 17 when display unit 5 is set in the rotated position.

When the operator rotates display unit 5, which is set in the open position shown in Figure 3, in the direction of an arrow F, display support member 21 and turntable 19 rotate along curved guide slots 31. Slide plate 27 and display stop member 23 also rotate in the direction of arrow F. Display unit 5 is set in rotated position shown in Figure 9, and turntable unit 17 is set in a third position as shown in Figure 10. In the third position, even though slide plate 27 in direction of arrow G, stop pin 49 of slide plate 27 does not engage in inner recess 33 of rotary guide plate 29. When slide plate 27 slides in the direction of arrow G, stop pin 49 contacts inner stop wall 34 of rotary guide plate 29. Inner stop wall 34 prevents slide plate 27 from sliding in the direction of arrow G, and a vertical rotation of display stopper 23 is prevented by inner stopper wall 34. Consequently, display stop member 23 prevents display unit 5 from rotating in the vertical direction. Display unit 5 does not strike inner corners 16 and display unit 5 is prevented from being damaged.

Figure 11 illustrates hinge devices 51.

Each hinge device 51 has a rotation axis 57, a coil spring 59 wound on a surface of rotation axis 57, an arm 61, for generating a hop up force by coil spring 59, fixed to rotation axis 57 and axis holders 63, 65 for pivotally holding rotation axis 57. Axis holders 63, 65 is fixed on a inner surface of leg 13 of display unit 5. One end 67 of rotation axis has a flat surface 69. End 67 is inserted in axis hole 24 (shown in Figure 2) and fixed in display supporter 21. Display unit 5 rotates around rotation axis 57. Coil spring 59 generates a brake force for stopping display unit 5 in an arbitrary angle. Coil spring 59 has a first end (not shown) and a second end 71. The first end is fixed to axis holder 65. The first end rotates with display unit 5 in the vertical direction. Arm 61 prevents the second end 71 of coil spring 59 rotating with display unit 5 in the direction of arrow A (shown in Figure 1). Arm 61 provides an upward force in the direction of arrow E (shown in Figure 6) on display unit 5. Cable guide duct 25 is fixed in second cable guide hole 48. Cable 73 is guided from base unit 3 to display unit 5 through first cable guide hole 41, second cable guide hole 48 and cable guide duct 25.

A description will now be given of the procedures of assembling the laptop computer 1.

First, rotary guide plate 29 is mounted on the bottom surface of upper rear case 15, and turntable 19, on which display support member 21 is fixed and to which display stop member 23 is pivotally connected, is rotatably connected on rotary guide plate 29 by screws 34. Next, cable 73 is inserted in first guide hole 47 and second guide hole 48, and cable guide duct 25 is inserted in second guiding hole 48. End 67 of hinge device 51, fixed on the inner surface of outer case 53, is inserted in axis hole 24 and rotation axis 57 is fixed to display supporter 21. Inner case 55 of display unit 5 is then fixed to outer case 53, so that display unit 5 is connected to upper rear case 15. Further, rear upper case 15, keyboard 9 and front upper case 7 are fixed to bottom case 6.

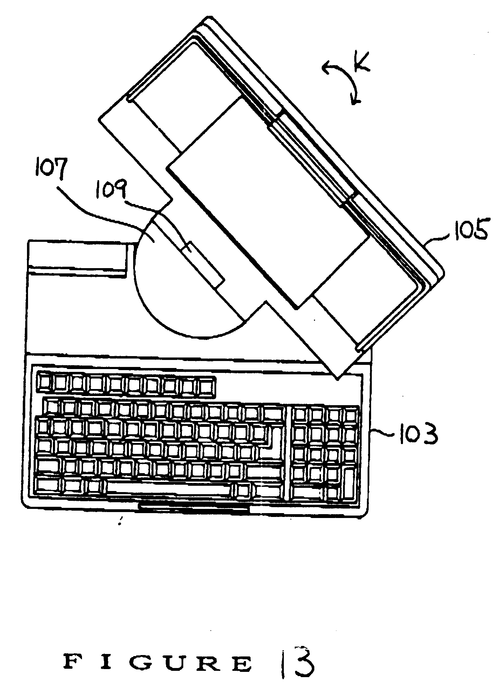

Figure 12 and Figure 13 illustrates a laptop computer according to a second embodiment of the present invention.

A laptop computer 101 has a body unit 103 and a display unit 105. Body unit 103 has a turntable 107 on which is mounted a display support member 109. Turntable 107 rotates relative to base unit 103 in a horizontal direction (arrow K). Display unit 105 is pivotally connected to display supporter 109. Display unit 105 rotates in a vertical direction (arrow L). A cable for electrically connecting base unit 103 and display unit 105, is guided by display supporter 109.

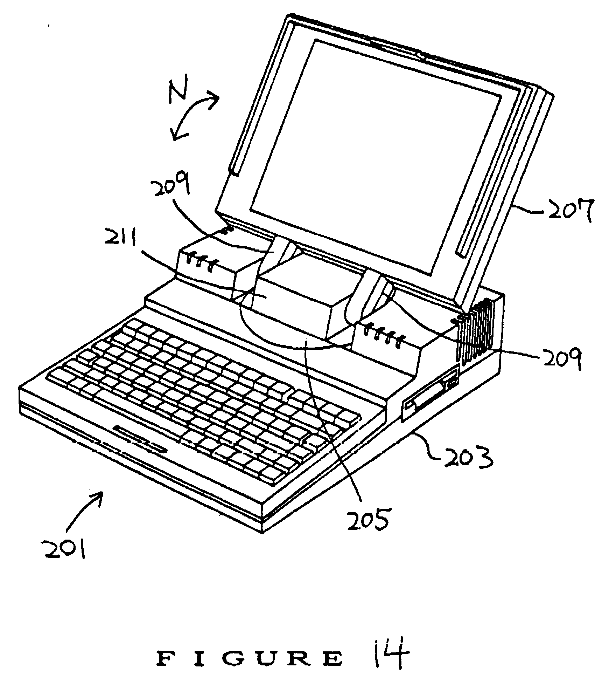

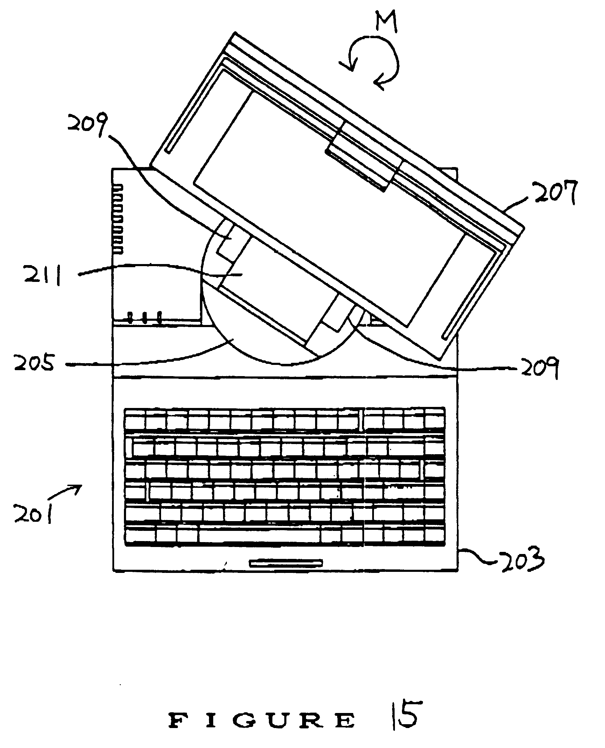

Figure 14 and Figure 15 illustrate a laptop computer according to a third embodiment of the present invention.

A laptop computer 201 includes a body unit 203 having a turn table 205 and a display unit 207 having a pair of legs 209. Turn table 205 has a display supporter 211 fixed to turntable 205. Each leg 209 is pivotally connected to display supporter 211. Turntable 205 rotates relative to base unit 203 in a horizontal direction (arrow M). Display unit 207 rotates in a vertical direction (arrow N). A cable, for electrically connecting base unit 203 and display unit 207, is guided by display supporter 211.

In the above described embodiments, the turntable rotates the leg of the display unit. However, the present invention is not limited to such embodiments, but instead the display unit may comprise a leg rotatable only in a vertical plane and a display screen rotable in the horizontal plane relative to the leg.

Furthermore in the above described embodiments, the display unit of the laptop computer rotates in a vertical and a horizontal direction. However, the present invention is not limited to such embodiments. The principles of the present invention may also be applied to another portable electronic apparatus, such as a portable word processor, a measuring apparatus or a portable television, having a flat panel display pivotally connected to a base.

## Claims

1. A laptop computer comprising a base unit (3) having a keyboard (9) and a flat panel display unit (5) having a display screen (11), characterised by:
means (17, 19) for pivoting the flat panel display unit (5) in a vertical plane between a closed position to cover the keyboard (9) with the flat panel display unit (5) and an open position for operating the keyboard (9) and for rotating the flat panel display unit (5) in a horizontal plane between the open position and a rotated open position.

2. A laptop computer according to claim 1, further comprising means for preventing pivoting of the flat panel display unit (5) in the rotated position.

3. A laptop computer according to claim 1, characterised in that the base unit (3) comprises a recess (8) for mounting the rotating means (19).

4. A laptop computer according to claim 3, characterised in that the pivoting and rotating means comprises a turntable (19) rotatably connected to the base unit (3) for rotation in a horizontal plane and a display support member (21), fixed to the turntable (19), and pivotally connecting the flat panel display unit (5) in the vertical direction.

5. A laptop computer according to claim 4, characterised in that the rotating means comprises a display stop member (23), pivotally connected to the turntable (19) and rotated by the pivotal movement of the flat panel display unit (5), a slide portion (49), slidably connected to the turntable (19), and moved by the rotation of the display stop member (23) and a cam surface (34), fixed to the base unit (3), for preventing sliding of the slide portion (49) in the rotated position.

6. A laptop computer according to claim 5, in which the rotating means (17) comprises a cable guide duct (25), fixed to the turntable (19) and pivotally connected to the flat panel display unit (5), for guiding a cable (73) which electrically connects the base unit (3) and the flat panel display unit (5).

7. A laptop computer according to claim 4, in which the base unit (3) comprises a rear upper case (15) and the flat panel display unit (5) comprises an outer case (53) being substantially flush with the rear upper case (15) when the flat panel display unit (5) is in the closed position.

8. A laptop computer according to claim 7, in which the display support member (21) comprises an upper portion which is substantially flush with the rear upper case (15) and the outer case (53) when the flat panel display unit (5) is in the closed position.

## Patentansprüche

1. Laptop-Computer mit einer Basiseinheit (3), die eine Tastatur (9) und eine ein Display (11) umfassende Flachbildschirmeinheit (5) enthält, gekennzeichnet durch:
eine Einrichtung (17, 19) zum Verschwenken der Flachbildschirmeinheit (5) in einer vertikalen Ebene zwischen einer geschlossenen Stellung, um die Tastatur (9) durch die Flachbildschirmeinheit (5) zu bedecken, und einer offenen Stellung, um die Tastatur (9) zu betätigen, und zum verdrehen der Flachbildschirmeinheit (5) in einer horizontalen Ebene zwischen der offenen Stellung und einer verdrehten offenen Stellung.

2. Laptop-Computer nach Anspruch 1, der außerdem eine Einrichtung enthält, um ein Verschwenken der Flachbildschirmeinheit (5) in der verdrehten Stellung zu verhindern.

3. Laptop-Computer nach Anspruch 1, dadurch gekennzeichnet, daß die Basiseinheit (3) eine Aussparung (8) zur Anbringung der Verdreheinrichtung (19) hat.

4. Laptop-Computer nach Anspruch 3, dadurch gekennzeichnet, daß die Verschwenk- und Verdreheinrichtung einen Drehtisch (19), der drehbar mit der Basiseinheit (3) verbunden ist, um in einer horizontalen Ebene verdreht werden zu können, und ein Displayhaltebauteil (21) umfaßt, das an dem Drehtisch (19) befestigt ist und durch das die Flachbildschirmeinheit (5) in vertikaler Richtung angebracht ist.

5. Laptop-Computer nach Anspruch 4, dadurch gekennzeichnet, daß die Verdreheinrichtung ein Displayanschlagbauteil (23), das schwenkbar mit dem Drehtisch (19) verbunden ist und durch die Schwenkbewegung der Flachbildschirmeinheit (5) gedreht wird, ein Gleitbauteil (49), das verschiebbar an dem Drehtisch (19) angebracht ist und durch Drehung des Displayanschlagbauteils (23) bewegt wird, und eine Nockenfläche (34) enthält, die an der Basiseinheit (3) befestigt ist, um in der verdrehten Stellung eine Gleitbewegung des Gleitbauteils (49) zu verhindern.

6. Laptop-Computer nach Anspruch 5, bei dem die Verdreheinrichtung (17) einen Kabelführungskanal (25) aufweist, der an dem Drehtisch (19) angebracht und schwenkbar mit der Flachbildschirmeinheit (5) verbunden ist, um ein Kabel (73) zu führen, durch das die Basiseinheit (3) elektrisch mit der Flachbildschirmeinheit (5) verbunden ist.

7. Laptop-Computer nach Anspruch 4, bei dem die Basiseinheit (3) ein hinteres oberes Gehäuse (15) und die Flachbildschirmeinheit (5) ein Außengehäuse (53) aufweist, das sich mit dem hinteren oberen Gehäuse (15) im wesentlichen in Ausrichtung befindet, wenn sich die Flachbildschirmeinheit (5) in der geschlossenen Stellung befindet.

8. Laptop-Computer nach Anspruch 7, bei dem das Displayhaltebauteil (21) einen oberen Abschnitt aufweist, der sich im wesentlichen mit dem hinteren oberen Gehäuse (15) und dem Außengehäuse (53) in Ausrichtung befindet, wenn sich die Flachbildschirmeinheit (5) in der geschlossenen Stellung befindet.

## Revendications

1. Ordinateur portable comprenant une unité de base (3) ayant un clavier (9) et une unité d'affichage à panneau plat (15) comportant un écran d'affichage (11), caractérisé par :
des moyens (17, 19) pour faire pivoter l'unité d'affichage à panneau plat (5) dans un plan vertical, entre une position fermée destinée à recouvrir le clavier (9) par l'unité d'affichage à panneau plat (5), et une position ouverte pour actionner le clavier (9) et pour faire tourner l'unité d'affichage à panneau plat (5) dans un plan horizontal, entre la position ouverte et une position ouverte tournée.

2. Ordinateur portable selon la revendication 1, comprenant en outre des moyens pour empêcher le pivotement de l'unité d'affichage à panneau plat (5) dans la position tournée.

3. Ordinateur portable selon la revendication 1, caractérisé en ce que l'unité de base (3) comprend une cavité (8) pour monter les moyens rotatifs (19).

4. Ordinateur portable selon la revendication 3, caractérisé en ce que les moyens de pivotement et de rotation comprennent une plaque tournante (19) connectée de manière rotative à l'unité de base (3) pour rotation dans un plan horizontal, et un organe support d'affichage (21), fixé à la plaque tournante (19), et relié de manière pivotante à l'unité d'affichage à panneau plat (5) dans la direction verticale.

5. Ordinateur portable selon la revendication 4, caractérisé en ce que les moyens rotatifs comprennent un organe de butée de dispositif d'affichage (23), connecté de manière pivotante à la plaque tournante (19), et mis en rotation par le mouvement pivotant de l'unité d'affichage à panneau plat (5), une partie coulissante (49), connectée de manière coulissante à la plaque tournante (19), et entraînée par la rotation de l'organe de butée de dispositif d'affichage (23) et une surface de came (34), fixée à l'unité de base (3), pour empêcher le coulissement de la partie coulissante (49) dans la position tournée.

6. Ordinateur portable selon la revendication 5, dans lequel les moyens rotatifs (17) comprennent un conduit de guidage de câble (25), fixé à la plaque tournante (19), et connecté de manière pivotante à l'unité d'affichage à panneau plat (5), pour guider un câble (73) reliant électriquement l'unité de base (3) et l'unité d'affichage à panneau plat (5).

7. Ordinateur portable selon la revendication 4, dans lequel l'unité de base (3) comprend un boîtier supérieur arrière (15), et l'unité d'affichage à panneau plat (5) comprend un boîtier externe (53) sensiblement au niveau du boîtier supérieur arrière (15), lorsque l'unité d'affichage à panneau plat (5) est dans la position fermée.

8. Ordinateur portable selon la revendication 7, dans lequel l'organe support d'affichage (21) comprend une partie supérieure sensiblement au niveau du boîtier supérieur arrière (15), et du boîtier externe (53), lorsque l'unité d'affichage à panneau plat (5) est dans la position fermée.
